# EUROPEAN PATENT SPECIFICATION

(11) **EP 3 043 007 B1**
(45) Date of publication and mention of the grant of the patent: **14.03.2018**
(21) Application number: 16150695.1
(22) Date of filing: 08.01.2016
(51) Int. Cl.: E04G 21/18, B23B 49/02, B25H 7/02

(54) **BUILDING PANEL PACKAGING AND TEMPLATE**
BAUPLATTENVERPACKUNG UND -SCHABLONE
EMBALLAGE ET GABARIT DE PANNEAU DE CONSTRUCTION

(30) Priority: 08.01.2015 GB 201500224
(43) Date of publication of application: 13.07.2016
(73) Proprietor: Knauf Insulation, 4600 Visé (BE)
(72) Inventor: Mencnarowski, Jan, 1435 Mont Saint Guibert (BE); van Eijk, John, 1435 Mont Saint Guibert (BE)
(74) Representative: ARC-IP

(56) References cited:
- FR-A- 1 481 168
- US-A- 3 859 002

## Description

The present invention relates to a sheet material template suitable for facilitating attachment of building panels to a supporting structure and/or for covering a stack of building panels.

Accurate positioning of fixing screws for securing a building panel to its supporting structure is desirable to ensure adequate mechanical resistance and to provide a pleasing visual appearance, especially when a plurality of building panels are arranged adjacent to each other to provide an extended surface. Measurement and marking of desired fixing screw positions on site is time consuming and labour intensive whilst selection of screw positions without measuring and marking is seldom sufficiently accurate.
Document FR 1 481 168 A discloses a template for installation of wall mounted appliance.

One aim of the present invention is to facilitate rapid and accurate selection of the positioning of building panel fixations on site.

The present invention provides a sheet material template as defined in claim 1, and a method of attaching a building panel to a support structure as defined in claim 15. The dependant claims define preferred or alternative embodiments.

The invention provides a sheet material template (1) for indicating positions for attaching a building panel to a supporting structure, comprising
- a central portion (2) having a first side (10) and an opposite second side (20);
- a handle opening (19) arranged in the central portion at or near a central axis (1020);
- a first side portion (100) foldably attached to the first side of the central portion by a first side fold (110);
- a second side portion (200) foldably attached to the second side of the central portion by a second side fold (220);
- a first handle portion (1000) foldably attached to the first side portion by a first handle fold (1100);
- a second handle portion (2000) foldably attached to the second side portion by a second handle fold (2200); and
- a plurality of template markings (11, 12, 13, 14, 15, 21, 22, 23) adapted to indicate desired attachment points to be used when attaching a building panels to a supporting structure;
   in which
   the sheet material template is adapted to be reconfigured from:
   i) an initial configuration in which the central portion, first side portion and second side portion are substantially co-planar to
   ii) a template configuration in which
      - the first side portion is folded about the first side fold; the first handle portion is folded about the first handle fold and received in the handle opening so as to form a first handle projection; and the first side portion forms a first building panel support;
      - the second side portion is folded about the second side fold; the second handle portion is folded about the second handle fold and received in the handle opening so as to form a second handle projection; and the second side portion forms a second building panel support.

The use of sheet material for the template and a configuration allowing the template to be provided in a form that is substantially coplanar or flat enables the template to have little bulk and thus be convenient to package for delivery. Notably, the template may be provided within or on top of a stack of building panels. The sheet material may be selected from: cardboard; corrugated cardboard; paper; plastics or combination thereof; it may be a single layer or a multi-layer sheet material. Corrugated cardboard is preferred for its combination of rigidity, availability, cost and ease of disposal and recycling. At least one surface of the sheet material may be provided with a facing, for example a paper or plastics facing, for example on a corrugated cardboard base. Preferably a single piece of sheet material is used. The template may be cut or stamped from a larger piece of sheet material; its thickness t is preferably substantially constant over its entire area. Markings, information (for example on how to configure and/or use the template), advertisements, images and/or inscriptions may be provided on the front and/or back surface.

The template is particularly suitable for attaching thermal and/or acoustical insulating panels to a support structure. The insulating panels may be selected from: wood wool panels; mineral wool insulating panels (including stone wool and glass wool insulating panels) and foam insulation panels. The insulating panels may comprises a single layer of insulation material or two or more layers of insulation material; where a plurality of layers on insulation material are used preferably at least two of the layers comprise different insulation materials. The insulation material(s) may be selected from wood wool, mineral wool, stone wool, glass wool, foam insulation, expanded polystyrene (EPS), extruded polystyrene (XPS) and phenolic foam. The insulating panels may comprise a layer of a first material, for example wood wool (notably a first material having a thickness ≥ 5mm, ≥10mm or ≥15mm and/or ≤ 150mm or ≤ 100mm or ≤ 75mm ≤ 50mm, ≤ 40mm or ≤30 mm) and a layer of a second material, for example mineral wool, particularly stone wool (notably a second material having a thickness ≥ 30mm or ≥ 40mm and/or ≤ 250mm or ≤ 200mm or ≤ 150mm ≤ 120mm or ≤100 mm). In the latter case, stone wool may provide an internal layer which abuts the supporting structure with wood wool providing an external layer. The supporting structure may provide a continuous surface against which the building panel is arranged; it may be a wall or a ceiling, for example, a ceiling of a garage or car park.

The insulation panels may have a thermal resistance R of ≥ 2.5 m²K/W or ≥ 4 m²K/W or ≥ 5 or ≥ 6 m²K/W. The insulation panels may provide fire resistance to the supporting structure, notably providing a fire resistance of EI30, EI60, EI90, EI120 or EI180 and/or REI30, REI60, REI90, REI120 or REI180 in accordance with EN 13501-2. The insulation panels may have a fire resistance of at least A2 in accordance with EN 13501-1.

A user holding the sheet material template, notably by its carrying handle grips, may hold a building panel against its support structure using the template and attach the building panel at the support structure by, for example, drilling through the panel at the positions of the template markings, notably drilling in to the supporting structure at the same time, and subsequently inserting attaching screws through the drilled holes to attach the panel to the support structure. Alternatively, the template may be used by sequentially: arranging the building panel on a support, for example on the floor or on a stack of panels; positioning the template on the building panel; drilling holes through the panel at the positions of the template markings; removing the template; positioning the building panel against the support structure; drilling in to the support structure through the holes drilled in the building panel; and inserting attaching screws through the holes drilled in the building panel in to the holes drilled in the support structure.

The building panels may be attached to their supporting structure using screws. The screws may have a nominal diameter of about 6 mm or about 8mm; they may have a cap having a diameter of about 20 mm or about 25 mm.

The central portion of the template is preferably rectangular; its length lₚ and width wₚ may be the same as the length and width of a building panel to be secured. In this case, in use, the periphery of the building panel may be aligned with the periphery of the central portion of the template.

The handle opening may comprise a slot through the central portion having a length lₕₒ; its width wₕₒ may be about twice the thickness t of the sheet material. The handle opening may comprise a single slot; it may comprise two spaced handle slots. The handle opening slot(s) may have a wider width at a portion of the extremities of the slot compared to the central portion of the slot.

The length lₛₚ of the first and a second side portions are preferably the same as the length of the central portion. Each of the first and a second side portions preferably has the same width wₛₚ, this width preferably being half the width of the central portion.

One or preferably each of the first and second side portions may also comprise a stabiliser side portion comprising one of more stabiliser portions, notably provided as partially detachable portions of the stabiliser side portions. Each stabiliser portion may comprise an attachment side having a length lₛ, notably a side by which it is attached to a side of the central portion, and a detachable periphery portion, notably provided in its respective stabiliser side portion. Preferably the attachment side of the stabiliser portion is co-linear with and/or part of the first or second side fold. The stabiliser portion in use may provide a projection from the central portion with which a side of a building panel may be aligned.

The handle portions may be substantially rectangular; their length lₕ is preferably about the same as the length of the handle opening lₕₒ. Each handle portion may comprise a handle grip defining a carrying handle preferably arranged such that, when the first and second handle portions lie against and are in contact with each other, a user can insert the fingers of one hand through both carrying grips. Each handle portion may comprise two spaced handle sections.

Each handle portion or section may comprise a retainer, notably a foldable retainer, adapted to be passed through the handle slot and be subsequently folded to restrict subsequent retraction of the handle portion. As with other folds of the template, folds of this foldable retainer may be provided by a pre-folded line or by a line of weakness which defined the fold and facilitates folding of the template along this fold line. Preferably, a foldable retainer is provided at each of the two ends of each handle portion or section; such a foldable retainer may have the shape of a trapezium or wedge.

The template marking(s) may comprise opening(s), preferably circular openings, through the sheet material, notable through the central portion. At least two, four, six or eight template markings may be provided. The diameter of the template markings may correspond to the diameter of a drill intended to be used with the template; generally the diameter of the template markings will be smaller than the diameter of a drill intended to be used with the template.

One or more disengagement openings may be arranged such that, for example when a side portion lies against and is in contact with the central portion, template markings openings are aligned with the disengagement openings such that passage through the template markings openings is not restricted. The disengagement openings may be provided as circles having a larger diameter than the diameter of the aligned template marking.

The sheet material template may comprise retainers and associated retainer openings which cooperate to secure the template in one of its configurations. The retainers may be provided by portions of the sheet material. Each retainer may comprise a fold having a length l_{f}, a detachable periphery and a retaining portion having an apparent width wᵣ, the apparent width being the maximum distance between the fold of the retainer and the detachable periphery in an axis perpendicular to the fold. The retainer may also comprise first and/or second lines of weakness defining wings. The lines of weakness may define fold lines from an end of the fold to an opposite side of the detachable periphery and the angle defined between the fold and the lines of weakness may be ≤ 90°, ≤ 80° ≤ 70°, ≤ 60° or ≤ 50°. A retaining portion defined by the fold, the first line of weakness, the detachable periphery and the second line of weakness may have the shape of a trapezium or wedge.

The length of each retainer opening adapted to receive a retainer is preferably about equal to the length of the fold of a retainer l_{f} and its width is preferably about the same as the apparent width of the retaining portion wᵣ. The retainers may be adapted to pass through the retainer openings, notably with their wings folded in, and then for their wings to be folded out to prevent unintended retraction of the retainer from the retainer opening.

The main axis of the retainers and associated retainer openings may be parallel and/or perpendicular to the central axis.

Folds of the sheet material template, notably the first and second side folds and first and second handle folds may be provided as folds in the sheet material; they may be provided as lines of weakness allowing folding of the sheet material. Particularly where the sheet material template is packaged with a stack of building panels, the building panels may have a length of about 1.2m or about 2 m and/or a width of about 0.6 m. Building panels may also have :
- a length of ≥ 1m, ≥ 1.2m, ≥ 1.5m, ≥ 1.7m, ≥ 2m and/or ≤ 2.5m; and/or
- a width of ≥ 0.4m, ≥ 0.6m, ≥ 0.8m and/or ≤ 1.2m or ≤ 1m.

Embodiments of the invention will now be described, by way of example only, with reference to the accompanying drawings of which:
Fig 1 is a perspective view of a first sheet material template in an initial configuration;
Figs 2 and 3 are perspective views showing stages of folding the first sheet material template in to a template configuration;
Fig 4 is a perspective view showing a template configuration of this template;
Fig 5 is a plan view showing a plurality of individually identified sets of template markings;
Fig 6 is an enlarged plan view of a retainer;
Fig 7, 8 and 9 are plan views illustrating respectively first, second and third sets of template markings;
Fig 10 is a side view of a sheet material template covering a package of two stacks of building panels;
Fig 11 is a plan view illustrating a second sheet material template in an initial configuration;
Fig 12 is a perspective view of the template of Fig 11 in a template configuration; and
Fig 13 is a plan view illustrating a third sheet material template in an initial configuration.

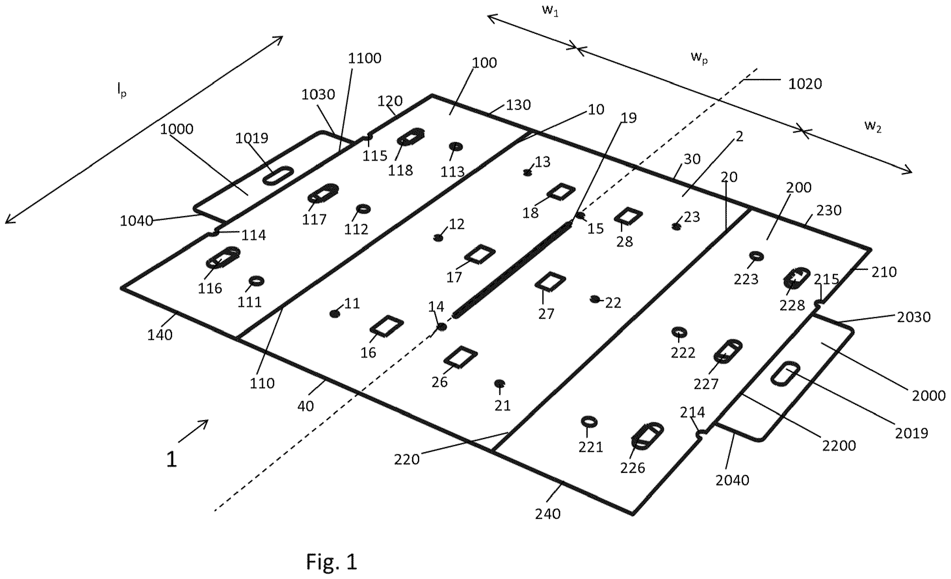

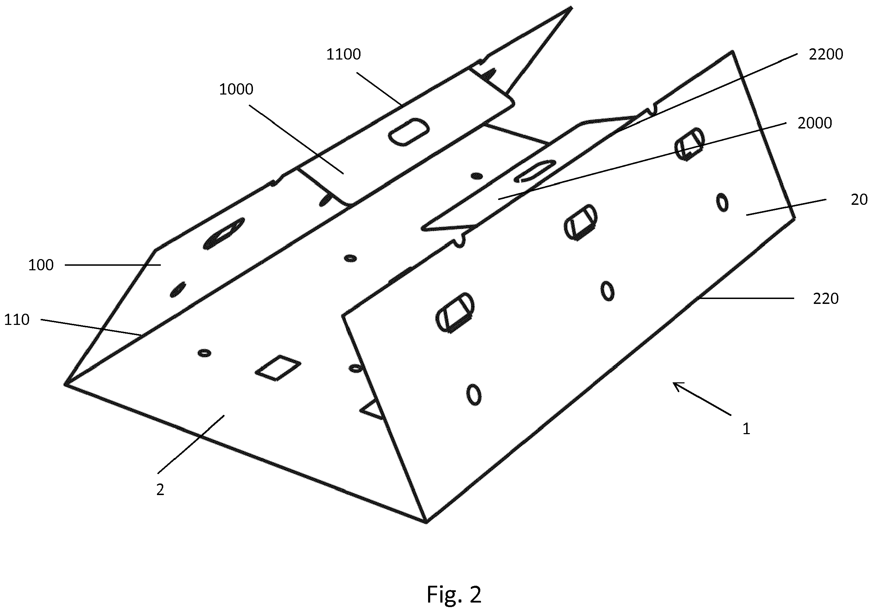

The sheet material template (1) of Figs 1-4 comprises:
- a rectangular central portion (2) having a length lp of about 1200 mm, a width wₚ of about 600 mm, a first side (10), an opposite second side (20), a top end (30) a bottom end (40);
- a handle opening (19) arranged in the central portion (2) at a central axis (1020);
- a first side portion (100) having a width w₁ of about 300 mm which is foldably attached to the first side of the central portion (2) by a first side fold (110) which lies along the first side (10) of the central portion (2); the first side portion has a top end (130), a bottom end (140) and a fourth side (120);
- a second side portion (200) having a width w₂ of about 300 mm which is foldably attached to the second side of the central portion (20) by a second slide fold (220) which lies along the second side (20) of the central portion (2); the second side portion has a top end (230), a bottom end (240) and a fourth side (210);
   - a substantially rectangular first handle portion (1000) having a length of about 500 mm and a width of about 100 mm which is foldably attached to the first side portion (100) by a first handle fold (1100) positioned along the first side portion equidistant between a top end (1030) and a bottom end (1040) of the first side portion;
   - a substantially rectangular second handle portion (2000) having a length of about 500 mm and a width of about 100 mm which is foldably attached to the second side portion (200) by a second handle fold (2200) positioned along the second side portion equidistant between a top end (2030) and a bottom end (2040) of the second side portion;
   - a first carrying handle grip (1019) comprising an opening in the form of a slot though the first handle portion (1000) having a length of about 90 mm and a width of about 30 mm;
   - a second carrying handle grip (2019) comprising an opening in the form of a slot through the second handle portion (2000) having a having a length of about 90 mm and a width of about 30 mm;
   - a plurality of template markings (11, 12, 13, 14, 15, 21, 22, 23) in the form of openings through the central portion;
   - a plurality of retainer openings (16, 17, 18, 26, 27, 28) in the form of openings through the central portion;
   - a plurality of retainers (116, 117, 118, 226, 227, 228) provided in and foldable with respect to the first and second side portions;
   - a plurality of disengagement openings (111, 112, 113, 114, 115, 214, 215, 221, 222, 223) through the first and second side portions.

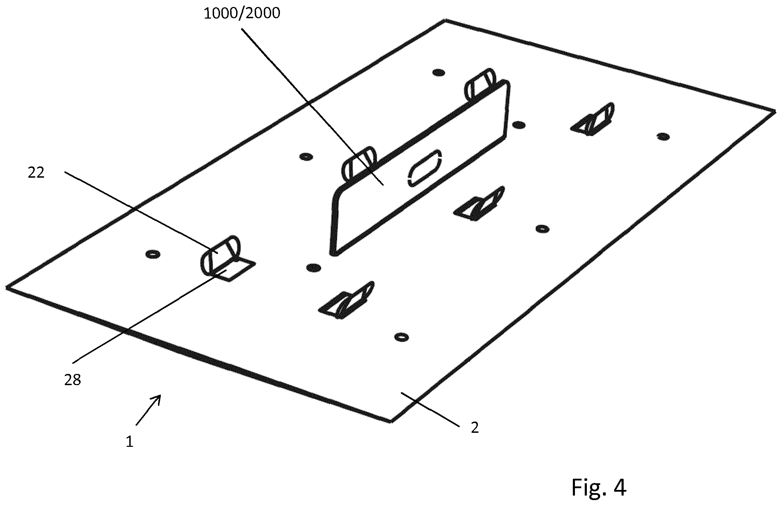

In the illustrated embodiment the sheet material template (1) is made of corrugated cardboard having a thickness of about 2 mm and a white paper facing. The sheet material template (1) may be cut or stamped from a larger sheet so as to provide a flat or co-planar sheet as shown in Fig. 1. From this initial configuration, in order to provide the template configuration shown in Fig. 4 the first and second side portions (100, 200) are folded toward each other about the first and second side folds (110, 220) respectively. The first and second handle portions (1000, 2000) are folded toward each other about the first and second handle folds (1100, 2200) respectively and inserted through the handle opening (19) to form the first and second handle projections as shown in Fig. 4. The surfaces of the first (11) and second (21) side portions then lie against and are in contact with the surface of the central portion (10).

The handle opening (19) lies along the central axis (1020), equidistant from the ends (30, 40) of the central portion; it has the form of a single slot with a width of about 4 mm and a length of about 500 mm.

The first handle portion (1000) is centrally arranged along the external, fourth side (120) of the first side portion (100) at a distance between the top end of the first side portion (130) and the top end of the first handle portion (1030) along the fourth side (120) of about 350mm. The second handle portion (2000) is arranged at an equivalent position along the external, fourth side (210) of the second side portion (200). The first and second handle portions (1000, 2000) each comprise a carrying handle grip (1019, 2019) arranged at a distance of about 45 mm from their respective handle folds (1100, 2200) and equidistant from their respective top (1030, 2030) and bottom (1040, 2040) ends.

The central portion (10) of the panel comprises eight template markings (11, 12, 13, 14, 15, 21, 22, 23) in the form of circular openings through sheet material with a diameter of about 15 mm:

Two template markings (14, 15) are arranged along the central axis (1020), one (15) being at a distance of about 300 mm from the top end of the central portion (30), the second (14) being at a distance of about 300 mm from the bottom end of the central portion (40).

Three template markings (11, 12, 13) are arranged at a distance of about 100 mm from the first side (10) of the central portion (40), the first (11) being at a distance of about 200 mm from the bottom end (40), the second (12) being equidistant from the top (30) and the bottom end (40) and the third (13) being at a distance of about 200 mm from the top end (30) of the central portion.

Three template markings (21, 22, 23) are arranged at a distance of about 100 mm from the second side (20) of the central portion (40), the first (21) being at a distance of about 200 mm from the bottom end (40), the second (22) being equidistant from the top (30) and the bottom end (40) and the third (23) being at a distance of about 200 mm from the top end (30) of the central portion.

The positions of the template markings, retainers, retainer openings, carrying handles and disengagement openings defined herein are the positions of their centres.

Ten disengagement openings (111, 112, 113, 114, 115, 214, 215, 221, 222, 223) are arranged through the first (100) and second (200) side portions. When the sheet material template is in the template configuration, i.e. when the first and second side portions lie against and are in contact with the central portion (2), the position of the disengagement openings corresponds to the positions of the template markings of the central portion. The disengagement openings provided at the edges of the panel (114, 115, 214, 215) are semi-circle with a radius of about 12.5 mm and the others (111, 112, 113, 221, 222, 223) are circular with a diameter of about 25 mm.

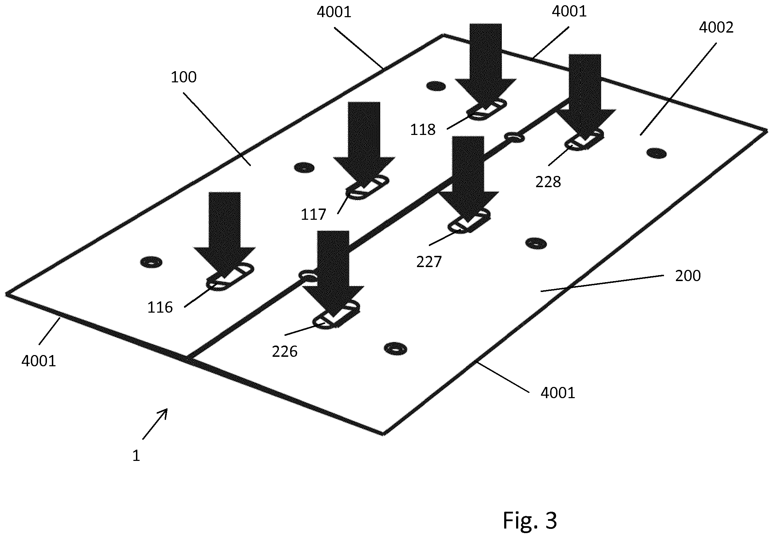

As illustrated in Fig 3 and Fig 4, the retainers (116, 117, 118, 226, 227, 228) are adapted to be passed through the retainer openings (16, 17, 18, 26, 27, 28) to assist in holding the cardboard sheet in its template configuration.

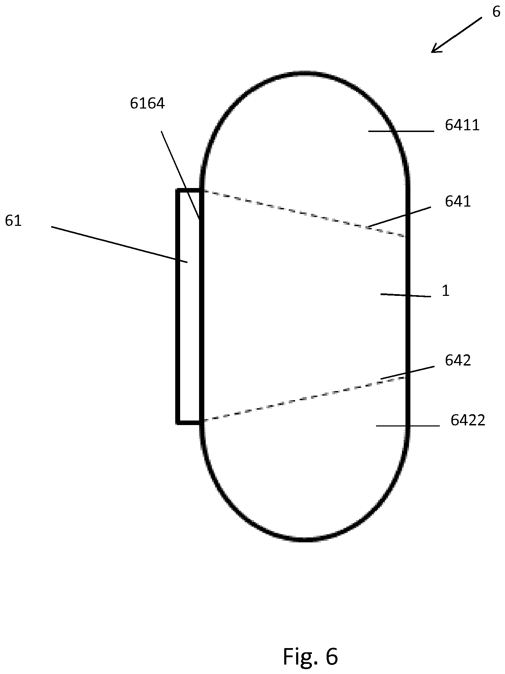

The first and second side portions each (100, 200) comprise three retainers provided by foldable portions of the cardboard sheet. As illustrated in Fig 6, each retainer (6) comprises a fold (61) in the side portion having a length of about 60 mm and a width of about 5 mm, a detachable periphery (62), a retaining portion (61) and two lines of weakness (641, 642) defining two wings (6411, 6422). The shape of the retaining portion is based on two parallel lines (631, 632) which form its sides and which are joined at each end by semi-circles. The width of the retaining portion is about 25 mm and its length is about 85 mm. The retaining portion is attached to the fold through one of its sides (6164) and each line of weakness projects from this side to the detachable periphery at the other side. The angle between the side (6164) and the line of weakness (641, 642) is about 70°. The three retainers (116, 117, 118) arranged in the first side portion (100) are positioned at a distance of about 85 mm from the external fourth side (120) of the first side portion, the first retainer (116) is placed at a distance of about 230 mm from the bottom end (140), the second is equidistant between the top (130) and the bottom (140) end and the third is placed at a distance of about 230 mm from the top end (130). The three retainers (226, 227, 228) of the second side portion (200) are arranged at equivalent positions in the second side portion.

Six rectangular shaped retainer openings (16, 17, 18, 26, 27, 28) are arranged through the central portion (2) each having a length of about 65 mm and a width of about 35 mm. As shown in Fig 4, when in the template configuration the position of each retainer corresponds to the position of a cooperating template opening through which the retainer is folded. The wings (6411, 6422) of the retainers are folded toward each other along the lines of weakness (641, 642) and each retaining portion (64) is inserted into its respective retainer opening (shown in Fig. 3). The wings of each retainer opening are then unfolded (shown in Fig. 4) so that the first and second side portions (100, 200) are retained against the central portion (2).

Once assembled in its template configuration as illustrated in Fig 4 the template may be used to assist correct attachment of, for example, an insulating building panel to a supporting ceiling, notably where the building panel has the same length and width as a periphery (4001) of a support surface (4002) provided by building panel supports (100, 200) of the first and second side portions. A user inserts one hand through the grips (1019, 2019) in the handle portions and uses the template to hold the building panel against the support surface. Using his or her other hand, the user then drills through the building panel at the positions of the template markings (11, 12, 13, 14, 15, 21, 22, 23) or drills self tapping screws through the building panel at the positions of the template markings so as to attach the building panel to its support structure.

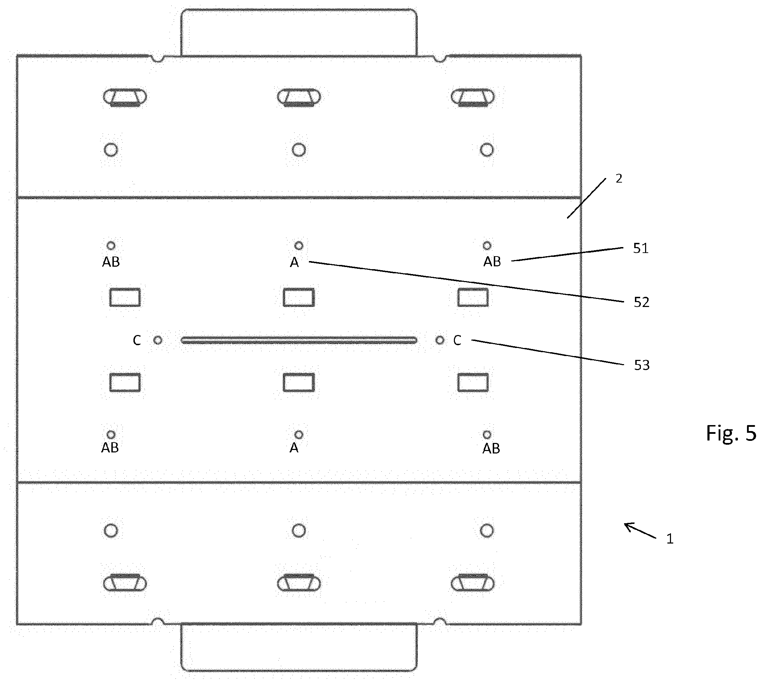

As shown in Fig. 5, on the side of the assembled template from which the handle portions project, letters (51, 52, 53) adjacent to each template markings indicate individual sets of template markings:
- The letters "AB" (51) indicated adjacent to template markings (11, 13, 21, 23) forming one set.
- The letter "A" (52) indicated adjacent to template markings (12, 22) forming another set.
- The letter "C" (53) indicated adjacent to template markings (14,15) forming a further set.

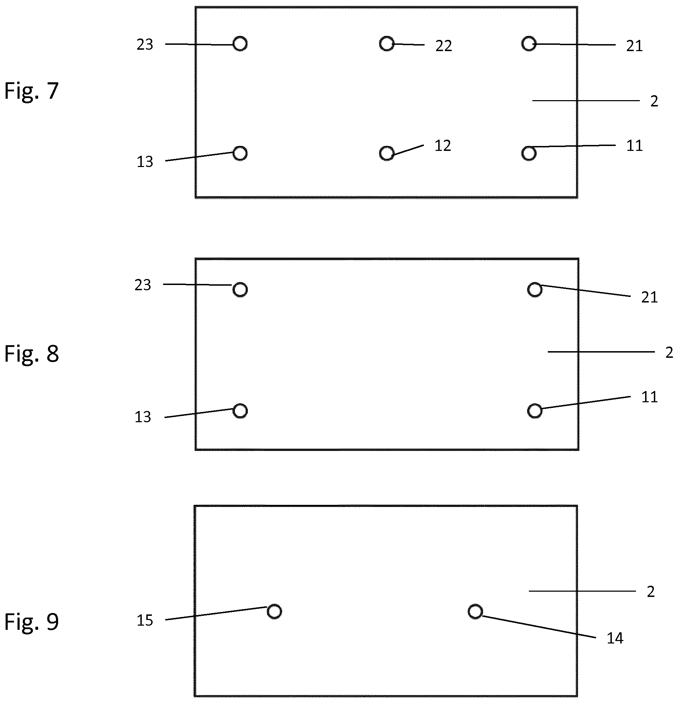

These sets facilitate attachment of the building panel at positions indicated by one or more of the sets, for example:
- Template markings containing the letter "A" (as shown in Fig. 7), or
- Template markings containing the letter "B" (as shown in Fig. 8), or
- Template markings containing the letter "C" (as shown in Fig. 9).

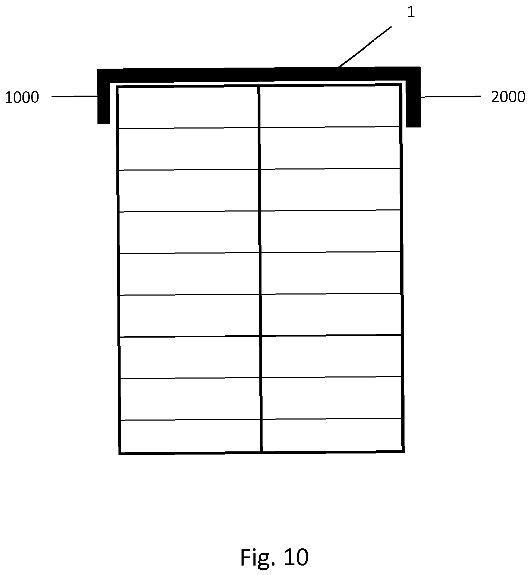

Fig 10 shows a covering configuration of the template in which the cardboard template sheet covers a stack of building panels. In the illustrated stack, buildings panels having a length of about 1200 mm and a width of about 600 mm are arranged in two adjacent stacks. The sheet material template (1) is placed on the top of the stack so that the central portion, the first and second side portion are coplanar and cover the top two building panels with each handle portions (1000, 2000) of the template being folded along the sides of the stacks of building panels. The stack of building panels incorporating the template in this configuration may be held together by straps and/or by an enveloping film.

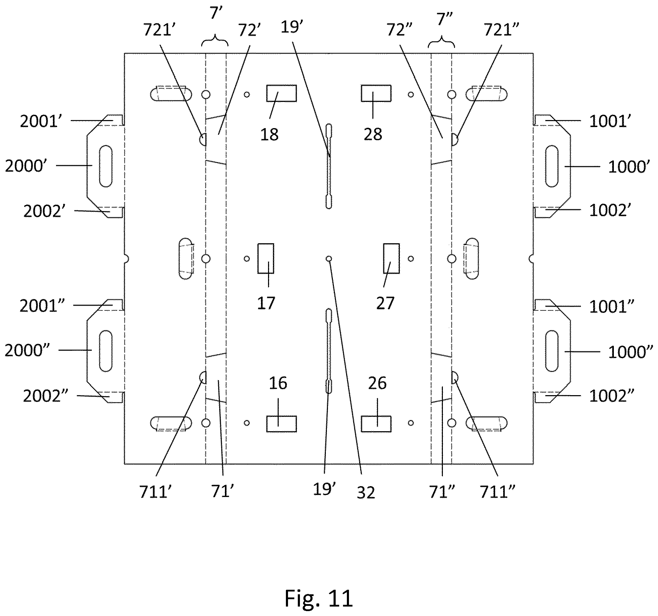

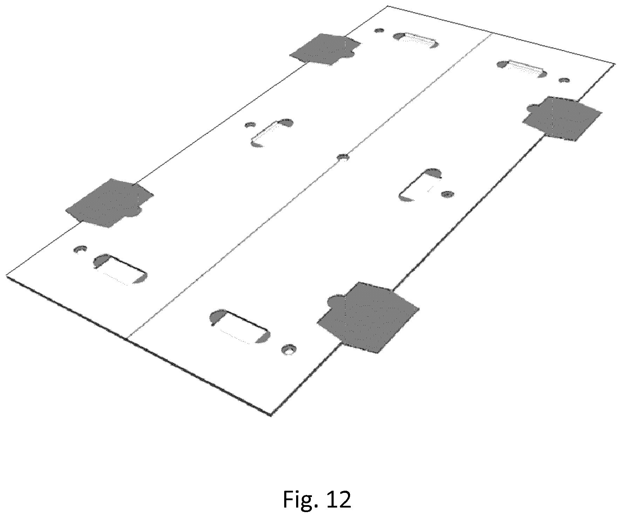

Figs 11 and 12 show a second embodiment of a sheet material template; the features that differ from that of the first sheet material template are described below.

This illustrated sheet material template comprises a handle opening consisting of two spaced handle slots (19', 19") arranged in the central portion at a central axis. The handle slots (19', 19") lie along the central axis, each having a length of about 20 to 40 cm and being positioned equidistantly between the centre of the template and the top (30) and bottom (40) ends of the central portion (2) of the template. Each handle slot has a width of about 4 mm for most of its length with a portion at each end of each handle slot having a width of about 8 mm.

In this configuration, the first handle portion comprises two spaced handle sections (1000', 1000") each positioned along the first side portion such that when folded about the first handle fold each can be inserted into is corresponding handle slot (19', 19"). An equivalent second handle portion consisting of two spaced handle sections (2000', 2000") is provided at the second side portion. Each handle section also comprising a carrying handle grip comprising an opening in the form of a slot though the first and second handle sections having a length of about 90 mm and a width of about 30 mm. Each handle section (1000', 1000", 2000', 2000") comprises two foldable retainers (1001', 1002'; 1001 ", 1002"; 2001', 2002'; 2001 ", 2002") adapted to be passed through the handle slot and subsequently folded to restrict retraction of the handle portions and to assist in holding the cardboard sheet in its template configuration.

The provision of handle sections which, in the template configuration, are offset from the centre of the template facilitates provision of a template marking (32), notably in the form of an opening, for example with a diameter of about 15 mm, arranged at the centre of the central portion.

In this configuration, the system of retainers (116, 117, 118, 226, 227, 228) and corresponding retainer openings comprises: two pairs of retainers (118, 228) and corresponding retainer openings (18, 28) positioned near the top ends (30,130,230) of the central portion, first side portion and second side portion and arranged to have an orientation perpendicular to the central axis; two pairs of retainers (116, 226) and corresponding retainer openings (16, 26) positioned near the bottom ends (40,140,240) of the central portion, first side portion and second side portion and arranged to have an orientation perpendicular to the central axis; and two pairs of retainers (117, 227) and corresponding retainer openings (17, 27) positioned approximately equidistant between the top (30,130,230) and bottom (40,140,240) ends and arranged to have an orientation parallel to the central axis. The provision of pairs of retainers and retainer opening having different or offset orientations may be used to improve stability and/or facilitate arrangement of desired template markings.

The first and second side portions each comprise a stabiliser side portion (7', 7") along the first and second side folds. The stabiliser side portions have a length of about the length of the central portion and a width of about 1 to 10 cm. Each stabiliser portion comprises two trapezoidal shaped stabilisers (71', 71", 72', 72") each of which has its longest length attached to the central portion through the first or second side fold. The other sides of the stabiliser comprise a detachable periphery. In order to help the user to detach the stabiliser from the stabiliser side portion, a hemispherical stabiliser opening (711', 711 ", 712', 712") lies along the detachable periphery of the stabiliser. The stabiliser opening may have a diameter of about 1.5 to 4cm.

As illustrated in Fig 12, once assembled in its template configuration, with the first (100) and second (200) side portions folded respectively about the first (110) and second (220) side folds, the stabilisers (71', 71", 72', 72") are project from the central portion (2). This may be used to enhance stability and/or to allow the edges of the stabilisers to be aligned with the edges of a panel which is wider than the central portion (2).

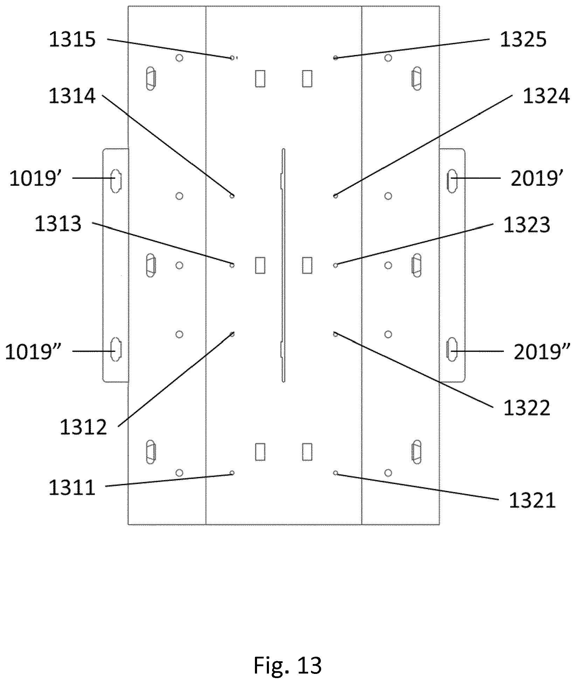

Fig 13 shows a third embodiment of a sheet material template; features that differ from that of the first sheet material template of Fig 1 are described below.

In this embodiment, the sheet material template has a length lp of about 2m. The first and second handle sections have a length of about 90cm and comprise two spaced carrying handle grips with each carrying handle grip comprises an opening (1019', 1019", 2019', 2019") in the form of a slot through the first and second handle sections. Each opening (1019', 1019", 2019', 2019") has a length of about 90 mm and a width of about 30 mm. The carrying handle grips may comprise retainers foldably attached to an edge of the grip on one handle section and adapted to be folded through the grip on the other handle section to help in retaining the handle sections together.

The central portion of the template comprises ten 15mm diameter template markings arranged as a first series of five co-linear template markings (1311, 1312, 1313, 1314, 1315) in the central portion of the template at a distance of about 100 mm from the first side (10) of the central portion (40) and a corresponding second series of five co-linear template markings (1321, 1322, 1323, 1324, 1325) arranged 100 mm from the second side (20) of the central portion. The positions of the five template markings of each series with respect to the top (30) and the bottom end (40) of the template are: one template marking (1313, 1323) equidistant between the top (30) and the bottom ends (40); one template marking (1311, 1321) 200mm from the bottom end (40), one template marking (1315, 1325) 200mm from the top end (30), one template marking (1312, 1322) 220mm below and one template marking (1314, 1324) 220 mm above the central template marking (1113, 1323). Each template marking has a corresponding 25 mm diameter disengagement opening.

## Claims

1. A sheet material template (1) for indicating positions for attaching a building panel to a supporting structure, comprising
- a central portion (2) having a first side (10) and an opposite second side (20);
- a handle opening (19) arranged in the central portion at or near a central axis (1020);
- a first side portion (100) foldably attached to the first side of the central portion by a first side fold (110);
- a second side portion (200) foldably attached to the second side of the central portion by a second side fold (220);
- a first handle portion (1000) foldably attached to the first side portion by a first handle fold (1100);
- a second handle portion (2000) foldably attached to the second side portion by a second handle fold (2200); and
- a plurality of template markings (11, 12, 13, 14, 15, 21, 22, 23) adapted to indicate desired attachment points to be used when attaching a building panels to a supporting structure;
**characterised in that**
the sheet material template (1) further comprises a handle opening (19) arranged in the central portion at or near a central axis (1020); and
the sheet material template (1) is adapted to be reconfigured from:
i) an initial configuration in which the central portion (2), first side portion (100) and second side portion (200) are substantially co-planar to
ii) a template configuration in which
- the first side portion (100) is folded about the first side fold (110); the first handle portion (1000) is folded about the first handle fold (1100) and received in the handle opening (19) so as to form a first handle projection; and the first side portion (100) forms a first building panel support;
- the second side portion (200) is folded about the second side fold (220); the second handle portion (2000) is folded about the second handle fold (2200) and received in the handle opening (19) so as to form a second handle projection; and the second side portion (200) forms a second building panel support.

2. The sheet material template of claim 1 wherein the sheet material comprises corrugated cardboard.

3. The sheet material template of any preceding claim wherein, in the template configuration, respective surfaces of the first (100) and second (200) side portion lie against and are in contact with the surface of the central portion (2).

4. The sheet material template of any preceding claim, wherein the sheet material template is adapted to take a covering configuration suitable for covering a stack of building panels, in which:
- the central portion (2), first side portion (100) and second side portion (200) are substantially co-planar ;
- the first handle portion (1000) is folded about the first handle fold (1100) substantially perpendicular to the central portion (2); and
- the second handle portion (2000) is folded about the second handle fold (2200) substantially perpendicular to the central portion (2).

5. The sheet material template of any preceding claim wherein the template markings comprise openings through the sheet material, notably arranged as a plurality of individually identified sets of template markings.

6. The sheet material template of any preceding claim wherein the template comprises one or more retainers (116, 117, 118, 226, 227, 228) and one or more retainer openings (16, 17, 18, 26, 27, 28), each retainer comprising a portion of the sheet material adapted to be retained at a corresponding retainer opening so as to retain the sheet material in its template configuration, notably wherein at least two retainer opening have different or offset orientations.

7. The sheet material template of any preceding claim, wherein each of the first (1000) and second (2000) handle portions comprises two spaced handle sections, notably offset from the centre of the template, notably with each handle portion comprising a grip portion provided by a recess or opening in the handle portion.

8. The sheet material template of any preceding claim, wherein the first (110) and second (220) side folds and the first and second handle folds are provided as folds in the sheet material.

9. The sheet material template of any preceding claim wherein
- the width (w₁) of the first side portion and the width (w₂) of the second side portion are the same; and
- the width (wₚ) of the central portion is twice the width (w₁) of the first side portion.

10. The sheet material template of any preceding claim comprising one or more foldable retainers associated with the handles portion(s) and adapted to be passed through the handle slot(s) and subsequently folded to restrict retraction of the handle portion(s), notably so as to assist in holding the cardboard sheet in its template configuration.

11. The sheet material template of any preceding claim, wherein the template comprises a stabiliser portion adapted to project from the central portion (2) of the template.

12. The sheet material template of any preceding claim, wherein the first (100) and second (200) side portions comprise stabiliser portions configured to be folded out of the respective first and second side portions and to project from the central portion.

13. A stack of building panels packaged with the sheet material template of any preceding claim having its central portion (2) and first (100) and second (200) side portions coplanar with the building panels, notably wherein the length and width of the central portion (2) of the template are substantially equal to the length and width of the building panels.

14. The stack of building panels of claim 13 wherein the building panels comprises a layer of wood wool, notably wherein the building panels comprise a layer of wood wool and a layer of mineral wool insulation.

15. A method of attaching a building panel to a support structure in which, whilst holding the building panel against the support structure using a template (1) in accordance with any of claims 1 to 12, at least one set of template markings is used to indicate positions at the building panel at which fixations should be arranged to attach the building panel to the support structure.

## Patentansprüche

1. Bogenwarenschablone (1) zum Angeben von Positionen zum Befestigen einer Bauplatte an einer Stützstruktur, umfassend:
- einen mittleren Abschnitt (2), der eine erste Seite (10) und eine gegenüberliegende zweite Seite (20) aufweist;
- einen ersten Seitenabschnitt (100), der faltbar an der ersten Seite des mittleren Abschnitts durch eine erste Seitenfalte (110) befestigt ist;
- einen zweiten Seitenabschnitt (200), der faltbar an der zweiten Seite des mittleren Abschnitts durch eine zweite Seitenfalte (220) befestigt ist;
- einen ersten Griffabschnitt (1000), der faltbar an dem ersten Seitenabschnitt durch eine erste Grifffalte (1100) befestigt ist;
- einen zweiten Griffabschnitt (2000), der faltbar an dem zweiten Seitenabschnitt durch eine zweite Grifffalte (2200) befestigt ist; und
- eine Vielzahl von Schablonenmarkierungen (11, 12, 13, 14, 15, 21, 22, 23), die angepasst sind, gewünschte Befestigungspunkte anzugeben, die beim Befestigen einer Bauplatte an einer Stützstruktur zu verwenden sind;
**dadurch gekennzeichnet, dass**
die Bogenwarenschablone (1) überdies eine Grifföffnung (19) umfasst, die in dem mittleren Abschnitt bei oder nahe einer Mittelachse (1020) angeordnet ist; und
die Bogenwarenschablone (1) angepasst ist, aus:
(i) einer anfänglichen Ausgestaltung, in der der mittlere Abschnitt (2), erste Seitenabschnitt (100) und zweite Seitenabschnitt (200) im Wesentlichen in derselben Ebene liegen, neu ausgestaltet zu werden in
(ii) eine Schablonenausgestaltung, in der
- der erste Seitenabschnitt (100) um die erste Seitenfalte (110) gefaltet ist; der erste Griffabschnitt (1000) um die erste Grifffalte (1100) gefaltet und in der Grifföffnung (19) aufgenommen ist, um einen ersten Griffvorsprung zu bilden; und der erste Seitenabschnitt (100) eine erste Bauplattenstütze bildet;
- der zweite Seitenabschnitt (200) um die zweite Seitenfalte (220) gefaltet ist; der zweite Griffabschnitt (2000) um die zweite Grifffalte (2200) gefaltet und in der Grifföffnung (19) aufgenommen ist, um einen zweiten Griffvorsprung zu bilden; und der zweite Seitenabschnitt (200) eine zweite Bauplattenstütze bildet.

2. Bogenwarenschablone nach Anspruch 1, wobei die Bogenware Wellpappe umfasst.

3. Bogenwarenschablone nach einem der vorhergehenden Ansprüche, wobei in der Schablonenausgestaltung entsprechende Oberflächen des ersten (100) und zweiten (200) Seitenabschnitts an der Oberfläche des mittleren Abschnitts (2) anliegen und mit ihr in Berührung stehen.

4. Bogenwarenschablone nach einem der vorhergehenden Ansprüche, wobei die Bogenwarenschablone angepasst ist, eine Abdeckausgestaltung anzunehmen, die zum Abdecken eines Bauplattenstapels geeignet ist, in der:
- der mittlere Abschnitt (2), erste Seitenabschnitt (100) und zweite Seitenabschnitt (200) im Wesentlichen in einer Ebene liegen;
- der erste Griffabschnitt (1000) um die erste Grifffalte (1100) im Wesentlichen senkrecht zu dem mittleren Abschnitt (2) gefaltet ist; und
- der zweite Griffabschnitt (2000) um die zweite Grifffalte (2200) im Wesentlichen senkrecht zu dem mittleren Abschnitt (2) gefaltet ist.

5. Bogenwarenschablone nach einem der vorhergehenden Ansprüche, wobei die Schablonenmarkierungen Öffnungen durch die Bogenware umfassen, die insbesondere als eine Vielzahl von einzeln identifizierten Sätzen von Schablonenmarkierungen angeordnet sind.

6. Bogenwarenschablone nach einem der vorhergehenden Ansprüche, wobei die Schablone eine oder mehrere Halterungen (116, 117, 118, 226, 227, 228) und eine oder mehrere Halterungsöffnungen (16, 17, 18, 26, 27, 28) umfasst, wobei jede Halterung einen Abschnitt der Bogenware umfasst, der angepasst ist, in einer entsprechenden Halterungsöffnung gehalten zu werden, um so die Bogenware in ihrer Schablonenausgestaltung zu halten, insbesondere wobei mindestens zwei Halterungsöffnungen unterschiedliche oder versetzte Ausrichtungen aufweisen.

7. Bogenwarenschablone nach einem der vorhergehenden Ansprüche, wobei sowohl der erste (1000) als auch der zweite (2000) Griffabschnitt zwei beabstandete Griffabschnitt umfasst, die insbesondere vom Mittelpunkt der Schablone versetzt sind, insbesondere wobei jeder Griffabschnitt einen Handgriffabschnitt umfasst, der durch eine Aussparung oder Öffnung im Griffabschnitt bereitgestellt ist.

8. Bogenwarenschablone nach einem der vorhergehenden Ansprüche, wobei die erste und (110) zweite (220) Seitenfalte und die erste und zweite Grifffalte als Falten in der Bogenware bereitgestellt sind.

9. Bogenwarenschablone nach einem der vorhergehenden Ansprüche, wobei
- die Breite (w₁) des ersten Seitenabschnitts und die Breite (w₂) des zweiten Seitenabschnitts dieselbe ist; und
- die Breite (w_{P}) des mittleren Abschnitts doppelt so groß wie die Breite (w₁) des ersten Seitenabschnitts ist.

10. Bogenwarenschablone nach einem der vorhergehenden Ansprüche, umfassend eine oder mehrere faltbare Halterungen, die dem/den Griffabschnitt(en) zugeordnet ist/sind und angepasst ist/sind, durch den/die Griffschlitz(e) gesteckt und anschließend gefaltet zu werden, um das Zurückziehen des Griffabschnitts/der Griffabschnitt zu beschränken, insbesondere um dabei zu helfen, den Bogen Pappe in seiner Schablonenausgestaltung zu halten.

11. Bogenwarenschablone nach einem der vorhergehenden Ansprüche, wobei die Schablone einen Stabilisierabschnitt umfasst, der angepasst ist, von dem mittleren Abschnitt (2) der Schablone hervorzustehen.

12. Bogenwarenschablone nach einem der vorhergehenden Ansprüche, wobei der erste (100) und zweite (200) Seitenabschnitt Stabilisierabschnitte umfassen, die ausgestaltet sind, aus dem jeweiligen ersten und zweiten Seitenabschnitt ausgefaltet zu werden und vom mittleren Abschnitt hervorzustehen.

13. Bauplattenstapel, der mit der Bogenwarenschablone nach einem der vorhergehenden Ansprüche verpackt ist, deren mittlerer Abschnitt (2) und erster (100) und zweiter (200) Abschnitt in einer Ebene mit den Bauplatten liegt, insbesondere wobei die Länge und Breite des mittleren Abschnitts (2) der Schablone im Wesentlichen gleich der Länge und Breite der Bauplatten ist.

14. Bauplattenstapel nach Anspruch 13, wobei die Bauplatten eine Schicht Holzwolle umfassen, insbesondere wobei die Bauplatten eine Schicht Holzwolle und eine Schicht Mineralwollisolierung umfassen.

15. Verfahren des Befestigens einer Bauplatte an einer Stützstruktur, wobei während des Haltens der Bauplatte gegen die Stützstruktur unter Verwendung einer Schablone (1) nach einem der Ansprüche 1 bis 12 mindestens ein Satz Schablonenmarkierungen verwendet wird, um Positionen an der Bauplatte anzugeben, an denen Fixierungen angebracht werden sollen, um die Bauplatte an der Stützstruktur zu befestigen.

## Revendications

1. Un gabarit de matériau en feuille (1) destiné à indiquer des endroits où fixer un panneau de construction à une structure portante, comprenant:
- une partie centrale (2) présentant un premier côté (10) et un deuxième côté opposé (20);
- une première partie latérale (100) fixée à déploiement au premier côté de la partie centrale par un premier pli latéral (110);
- une deuxième partie latérale (200) fixée à déploiement au deuxième côté de la partie centrale par un deuxième pli latéral (220);
- une première partie de poignée (1000) fixée à déploiement à la première partie latérale par un premier pli de poignée (1100);
- une deuxième partie de poignée (2000) fixée à déploiement à la deuxième partie latérale par un deuxième pli de poignée (2200); et
- une pluralité de marquages de gabarit (11, 12, 13, 14, 15, 21, 22, 23) adaptés à indiquer les points de fixation souhaités à utiliser lors de la fixation des panneaux de construction à une structure portante;
**caractérisé en ce que**
le gabarit de matériau en feuille (1) comprend en outre une ouverture de poignée (19) disposée dans la partie centrale sur ou à proximité d'un axe central (1020);
et le gabarit de matériau en feuille (1) est adapté à être reconfiguré à partir de:
(i) une configuration initiale dans laquelle la partie centrale (2), la première partie latérale (100) et la deuxième partie latérale (200) sont substantiellement coplanaires en
(ii) une configuration de gabarit dans laquelle
- la première partie latérale (100) est pliée aux environs du premier pli latéral (110); la première partie de poignée (1000) est pliée aux environs du premier pli de poignée (1100) et reçue dans l'ouverture de poignée (19) de manière à former une première saillie de poignée; et la première partie latérale (100) forme un premier support de panneau de construction;
- la deuxième partie latérale (200) est pliée aux environs du deuxième pli latéral (220); la deuxième partie de poignée (2000) est pliée aux environs du deuxième pli de poignée (2200) et reçue dans l'ouverture de poignée (19) de manière à former une deuxième saillie de poignée; et la deuxième partie latérale (200) forme un deuxième support de panneau de construction.

2. Le gabarit de matériau en feuille selon la revendication 1, dans lequel le matériau en feuille comprend du carton ondulé.

3. Le gabarit de matériau en feuille selon l'une quelconque revendication précédente dans lequel, dans sa configuration de gabarit, les surfaces respectives de la première (100) et de la deuxième (200) partie latérale sont positionnées contre, tout en étant en contact avec la surface de la partie centrale (2).

4. Le gabarit de matériau en feuille selon l'une quelconque revendication précédente, dans lequel le gabarit de matériau en feuille est propre à prendre une configuration de couverture pour recouvrir un empilement de panneaux de construction, dans lequel:
- la partie centrale (2), la première partie latérale (100) et la deuxième partie latérale (200) sont substantiellement co-planaires;
- la première partie de poignée (1000) est pliée aux environs du premier pli de poignée (1100) de manière substantiellement perpendiculaire à la partie centrale (2); et
- la deuxième partie de poignée (2000) est pliée aux environs du deuxième pli de poignée (2200) de manière substantiellement perpendiculaire à la partie centrale (2).

5. Le gabarit de matériau en feuille selon l'une quelconque revendication précédente, dans lequel les marquages de gabarit comprennent des ouvertures à travers le matériau en feuille, notamment agencés sous la forme d'une pluralité de jeux de marquages de gabarit individuellement identifiables.

6. Le gabarit de matériau en feuille selon l'une quelconque revendication précédente, dans lequel le gabarit comprend un ou plusieurs dispositifs de retenue (116, 117, 118, 226, 227, 228) et une ou plusieurs ouvertures pour dispositif de retenue (16, 17, 18, 26, 27, 28), chaque dispositif de retenue comprenant une partie du matériau en feuille adapté à être retenue à une ouverture de dispositif de retenue correspondante de manière à retenir le matériau en feuille dans sa configuration de gabarit, notamment où au moins deux ouvertures de dispositif de retenue présentent différentes orientations ou des orientations décalées.

7. Le gabarit de matériau en feuille selon l'une quelconque revendication précédente, dans lequel chacune des première (1000) et deuxième (2000) parties de poignée comprend deux sections de poignée espacées, notamment en décalage par rapport au centre du gabarit, chaque partie de poignée comprenant notamment une partie de prise fournie par un évidement ou une ouverture dans la partie de poignée.

8. Le gabarit de matériau en feuille selon l'une quelconque revendication précédente, dans lequel les premier (110) et deuxième (220) plis latéraux, ainsi que les premier et deuxième plis de poignée sont fournis sous forme de plis dans la matériau en feuille.

9. Le gabarit de matériau en feuille selon l'une quelconque revendication précédente, dans lequel
- la largeur (w₁) de la première partie latérale et la largeur (w₂) de la deuxième partie latérale sont identiques; et
- la largeur (wₚ) de la partie centrale est le double de la largeur (w₁) de la première partie latérale.

10. Le gabarit de matériau en feuille selon l'une quelconque revendication précédente, comprenant un ou plusieurs dispositifs de retenue pliables associés à la ou aux parties de poignée et adapté(s) à pouvoir passer à travers la ou les fente/s de poignée et ensuite pliés pour limiter le retrait de la ou des parties de poignée, notamment pour aider à maintenir la feuille de carton dans sa configuration de gabarit.

11. Le gabarit de matériau en feuille selon l'une quelconque revendication précédente, dans lequel le gabarit comprend une partie de stabilisation adaptée à se projeter depuis la partie centrale (2) du gabarit.

12. Le gabarit de matériau en feuille selon l'une quelconque revendication précédente, dans lequel les première (100) et deuxième (200) parties latérales comprennent des parties de stabilisation configurées pour se déplier des première et deuxième parties latérales respectives et se projeter depuis la partie centrale.

13. Un empilement de panneaux de construction empaquetés avec le gabarit de matériau en feuille selon l'une quelconque revendication précédente dont la partie centrale (2) et les première (100) et deuxième (200) parties latérales sont coplanaires avec les panneaux de construction, dans lequel notamment la longueur et la largeur de la partie centrale (2) du gabarit sont substantiellement égales à la longueur et à la largeur des panneaux de construction.

14. L'empilement des panneaux de construction selon la revendication 13, dans lequel les panneaux de construction comprennent une couche de laine de bois, notamment dans lequel les panneaux de construction comprennent une couche de laine de bois et une couche isolante de laine minérale.

15. Un procédé de fixation d'un panneau de construction à une structure portante dans lequel, tout en maintenant le panneau de construction contre la structure portante en utilisant un gabarit (1) selon l'une quelconque des revendications 1 à 12, au moins un jeu de marquages de gabarit est utilisé pour indiquer des endroits au panneau de construction auxquelles les fixations doivent être disposées pour fixer le panneau de construction à la structure portante.
